# EUROPÄISCHE PATENTANMELDUNG

(11) **EP 0 838 477 A2**
(43) Veröffentlichungstag der Anmeldung: **29.04.1998**
(21) Anmeldenummer: 97117557.5
(22) Anmeldetag: 10.10.1997
(51) Int. Cl.: C08F 8/06

(54) **Verfahren zur Herstellung oxidierter Polyethylenwachse**

(30) Priorität: 24.10.1996 DE 19644270
(71) Anmelder: BASF AKTIENGESELLSCHAFT, 67056 Ludwigshafen (DE)
(72) Erfinder: Deckers, Andreas, Dr., 55234 Flomborn (DE); Brüderle, Hugo, 67678 Mehlingen (DE); Sessig, Volker, 67227 Frankenthal (DE)

(57) **Zusammenfassung**

Verfahren zur Herstellung oxidierter Polyethylenwachse durch Oxidation von Polyethylenwachsen mit Sauerstoff oder sauerstoffhaltigen Gasen bei einer Temperatur von 120 bis 250°C und einem Druck von 1 bis 200 bar, wobei man die Oxidationsreaktion in Gegenwart eines Ethylen-(Meth)acrylsäure-Copolymers durchführt.

## Beschreibung

Gegenstand der vorliegenden Erfindung ist ein Verfahren zur Herstellung oxidierter Polyethylenwachse durch Oxidation von Polyethylenwachsen mit Sauerstoff oder sauerstoffhaltigen Gasen bei einer Temperatur von 120 bis 250°C und einem Druck von 1 bis 200 bar.

Weiterhin sind Gegenstand der vorliegenden Erfindung oxidierte Polyethylenwachse, die nach diesem Verfahren erhältlich sind sowie die Verwendung der oxidierten Polyethylenwachse in oder als Überzugsmassen oder in oder als Oberflächenpflegemittel.

Oxidierte Wachse lassen sich durch Zusatz geeigneter Hilfsstoffe, insbesondere Tenside, in Wasser dispergieren und finden so breite Verwendung als Überzugs- und Pflegemittel. Neben natürlichen Wachsen haben insbesondere Polyethylenwachse als Wachsrohstoffe Bedeutung erlangt.

Die Oxidation von Polyethylenwachsen ist seit langem bekannt. In DE-A-1 180 131 wird ein Verfahren zur Oxidation von geschmolzenen Polyethylenwachsen mit Sauerstoff oder diesen enthaltenden Gasen beschrieben. Bei derartigen Oxidationsreaktionen wird zu Beginn der Umsetzung eine Inhibierungs- oder Induktionsphase beobachtet, in der kaum Wachs oxidiert wird und welche die Raum-Zeit-Ausbeute und damit die Wirtschaftlichkeit des Verfahrens beeinträchtigt.

Zur Überwindung dieser Nachteile wurden verschiedene Anstrengungen unternommen. So wird in DE-A-12 37 783 der Zusatz bereits oxidierten Polyethylenwachses zum Oxidationsgemisch beschrieben. Durch diese Maßnahme wird zwar die Induktionszeit wesentlich verkürzt, die Oxidationsprodukte weisen jedoch erhebliche Verfärbungen auf, die einer Verwendung in vielen Bereichen entgegenstehen. Außerdem sind aus diesem Material hergestellte wässrige Dispersionen mit zahlreichen vernetzten Gelteilchen durchsetzt.

Der vorliegenden Erfindung lag daher die Aufgabe zugrunde, ein Verfahren zur Herstellung oxidierter Polyethylenwachse zu finden, welches eine verbesserte Raum-Zeit-Ausbeute aufweist und zu oxidierten Polyethylenwachsen geringerer Färbung führt.

Demgemäß wurde ein Verfahren zur Herstellung oxidierter Polyethylenwachse durch Oxidation von Polyethylenwachsen mit Sauerstoff oder sauerstoffhaltigen Gasen bei einer Temperatur von 120 bis 250°C und einem Druck von 1 bis 200 bar gefunden, welches dadurch gekennzeichnet ist, daß man die Oxidationsreaktion in Gegenwart eines Ethylen-(Meth)acrylsäure-Copolymers durchführt.

Weiterhin wurden oxidierte Polyethylenwachse gefunden, die nach diesem Verfahren erhältlich sind sowie die Verwendung dieser oxidierten Polyethylenwachse in oder als Überzugsmasse oder Oberflächenpflegemittel.

Als Ausgangsmaterial können verschiedene Polyethylenwachse dienen. Die Herkunft dieser Wachse ist dabei nicht kritisch. So können die Wachse durch Polymerisation in Hoch- oder Niederdruckverfahren und mit den unterschiedlichsten Katalysatoren wie Ziegler-, Phillips- oder Metallocenkatalysatoren hergestellt worden sein. Bevorzugt sind Polyethylenwachse mit einer Dichte von 0,90 bis 0,98 g/cm³ und einem Molekulargewicht M_{w} von 500 bis 40 000 g/mol.

Als Oxidationsmittel können Sauerstoff oder sauerstoffhaltige Gase verwendet werden. Vorzugsweise wird zur Oxidation Luft eingesetzt. Das Oxidationsgas wird entweder in das Reaktionsgemisch eingeblasen, oder es wird auf das Gemisch aufgepreßt und z.B. durch Rühren des Gemisches eingetragen und verteilt. Zur Oxidation wird vorzugsweise ein Sauerstoffstrom von 0,1 l · h⁻¹ · kg Wachs⁻¹ bis 100 l · h⁻¹ · kg Wachs⁻¹, besonders bevorzugt 1 bis 10 l · h⁻¹ · kg Wachs⁻¹ eingestellt.

Die Oxidationsreaktion wird üblicherweise in einem gerührten Autoklaven durchgeführt.

Die Reaktionstemperatur bei der Oxidation liegt zwischen 120 und 250°C, vorzugsweise zwischen 140 und 200°C. Der Reaktionsdruck wird vorzugsweise auf 5 bis 40 bar eingestellt.

Die Oxidationszeit hängt von der Art des Oxidationsgases, von der Temperatur und vom Druck ab. Sie wird in der Regel so gewählt, daß der gewünschte Oxidationsgrad, der je nach Verwendung des Produktes unterschiedlich sein kann, erreicht wird. Ein üblicher Oxidationsgrad entspricht beispielsweise einer Säurezahl von 20 und wird im allgemeinen nach einer Reaktionszeit von 1 bis 4 Stunden erreicht. Die optimale Reaktionszeit ist durch wenige Vorversuche leicht zu ermitteln.

Erfindungsgemäß wird dem Oxidationsgemisch zur Verminderung der Induktionszeit ein Ethylen-(Meth)acrylsäure-Copolymer zugesetzt. Dieses Copolymer kann neben Ethylen Methacrylsäure-, Acrylsäure- oder ein Gemisch dieser Einheiten enthalten. Derartige Copoylmere sind bekannt und werden im allgemeinen durch Hochdruckcopolymerisation von Ethylen mit den ungesättigten Carbonsäuren hergestellt. Die Herstellweise sowie die Eigenschaften solcher Copolymere sind beispielsweise in EP-A-17 229 und US-A-4 351 931 beschrieben.

Die carboxylgruppenhaltigen Copolymere werden im allgemeinen mit den Polyethylenwachsen vor Beginn der Oxidation zusammengeschmolzen. Vorteilhaft ist daher, wenn das Polyethylenwachs und das Copolymer ähnliche Schmelzpunkte und ähnliche Schmelzviskositäten aufweisen, was durch Wahl eines Copolymeres mit entsprechendem Molekulargewicht und Carboxylgruppengehalt erreicht werden kann.

Bevorzugt ist ein Verfahren zur Herstellung oxidierter Polyethylenwachse, bei dem man die Oxidationsreaktion in Gegenwart von 0,1 bis 20 Gew.-%, besonders bevorzugt von 1 bis 10 Gew.-% eines Ethylen-(Meth)acrylsäure-Copolymeren, bezogen auf die Gesamtmasse von Polyethylenwachs und Copolymer, durchführt.

Das eingesetzte Ethylen-(Meth)acrylsäure-Copolymer enthält vorzugsweise einen Anteil von Acrylsäure- und/oder Methacrylsäureeinheiten von 1 bis 25 Gew.-%, besonders bevorzugt von 2 bis 10 Gew.-%, bezogen auf die Gesamtmasse des Copolymeren.

Die nach dem erfindungsgemäßen Verfahren erhältlichen oxidierten Polyethylenwachse zeichnen sich durch ausgezeichnete Dispersionseigenschaften aus. Sie lassen sich in Wasser absolut gelfrei dispergieren und sind praktisch farblos.

Aufgrund ihrer vorteilhaften Eigenschaften lassen sich die erfindungsgemäßen oxidierten Polyethylenwachse vorteilhaft als oder in Überzugsmassen verschiedenster Art verwenden, z.B. als Überzugsmasse für Zitrusfrüchte.

Weiterhin finden die erfindungsgemäßen oxidierten Polyethylenwachse vorteilhaft Verwendung als oder in Oberflächenpflegemitteln. Die Wachse werden dazu als wäßrige Dispersion auf die zu pflegende Oberfläche, wie Fußböden, Fliesen oder Möbelstücke, aufgetragen und bewirken so eine glänzende Schutzschicht.

### Beispiele:

In einem mittels eines Impellerrührers gerührten 1 l-Stahlautoklaven wurden 400 g LDPE-Wachs mit einer Schmelzviskosität von 1200 cst (bei 120°C (mm²/s), gemessen gemäß DIN 51 562) und die in der Tabelle angegebenen Mengen des jeweiligen Ethylen-(Meth)acrylat-Copolymeren durch Erwärmung auf 160°C zusammengeschmolzen. Anschließend wurde der Rührer angeschaltet und 30 l · h⁻¹ · kg Wachs⁻¹ Luft durch das Gemisch geleitet. Im Abstand von 15 min wurden Proben entnommen und titrimetrisch die Säurezahl bestimmt. Als Vergleich wurde unter gleichen Bedingungen eine Oxidation in Abwesenheit von Copolymer durchgeführt. Die folgende Tabelle zeigt die Ergebnisse.

| Beispiel | Copolymer 1* [Gew.-%] | Copolymer 2* [Gew.-%] | Druck [bar] | Oxidationszeit bis Säurezahl 20 [min] |
|---|---|---|---|---|
| 1 | 5 | - | 30 | 110 |
| 2 | 10 | - | 30 | 90 |
| 3 | 5 | - | 20 | 140 |
| 4 | 10 | - | 20 | 115 |
| 5 | - | 10 | 30 | 100 |
| 6 | - | 10 | 20 | 150 |
| Vergl.-beispiel | - | - | 30 | 210 |

| | | | | |
|---|---|---|---|---|
| * Copolymer 1 mit 5,3 Gew.-% Acrylsäureeinheiten, Schmelzviskosität 1100 cst | | | | |
| ** Copolymer 2 mit 4,6 Gew.-% Methacrylsäureeinheiten, Schmelzviskosität 980 cst | | | | |

## Patentansprüche

1. Verfahren zur Herstellung oxidierter Polyethylenwachse durch Oxidation von Polyethylenwachsen mit Sauerstoff oder sauerstoffhaltigen Gasen bei einer Temperatur von 120 bis 250°C und einem Druck von 1 bis 200 bar, dadurch gekennzeichnet, daß man die Oxidationsreaktion in Gegenwart eines Ethylen-(Meth)acrylsäure-Copolymers durchführt.

2. Verfahren zur Herstellung oxidierter Polyethylenwachse nach Anspruch 1, dadurch gekennzeichnet, daß man die Oxidationsreaktion in Gegenwart von 0,1 bis 20 Gew.-% eines Ethylen-(Meth)acrylsäure-Copolymeren, bezogen auf die Gesamtmasse von Polyethylenwachs und Copolymer, durchführt.

3. Verfahren zur Herstellung oxidierter Polyethylenwachse nach Anspruch 1 oder 2, dadurch gekennzeichnet, daß das Ethylen-(Meth)acrylsäure-Copolymere einen Anteil von Acrylsäure- und/oder Methacrylsäureeinheiten von 1 bis 25 Gew.-%, bezogen auf die Gesamtmasse des Copolymeren, enthält.

4. Verfahren zur Herstellung oxidierter Polyethylenwachse nach den Ansprüchen 1 bis 3, dadurch gekennzeichnet, daß man zur Oxidation Luft einsetzt.

5. Verfahren zur Herstellung oxidierter Polyethylenwachse nach den Ansprüchen 1 bis 4, dadurch gekennzeichnet, daß man zur Oxidation einen Sauerstoffstrom von 0,1 l · h⁻¹ · kg Wachs⁻¹ bis 100 l · h⁻¹ · kg Wachs⁻¹ durch das Reaktionsgemisch leitet.

6. Oxidierte Polyethylenwachse, erhältlich nach einem Verfahren gemäß den Ansprüchen 1 bis 5.

7. Verwendung der oxidierten Polyethylenwachse gemäß Anspruch 6 in oder als Überzugsmassen.

8. Verwendung der oxidierten Polyethylenwachse gemäß Anspruch 6 in oder als Oberflächenpflegemittel.

9. Verwendung der oxidierten Polyethylenwachse gemäß Anspruch 6 in oder als Überzugsmassen für Zitrusfrüchte.
